Europäisches Patentamt

European Patent Office

Office européen des brevets

(11) Veröffentlichungsnummer: **0 206 232**
**A2**

## (12) EUROPÄISCHE PATENTANMELDUNG

(21) Anmeldenummer: **86108284.0**

(22) Anmeldetag: **18.06.86**

(51) Int. Cl.⁴: **A 01 B 35/16, A 01 B 35/28**

(30) Priorität: **20.06.85 US 747143**

(43) Veröffentlichungstag der Anmeldung: **30.12.86**
**Patentblatt 86/52**

(84) Benannte Vertragsstaaten: **DE FR GB SE**

(71) Anmelder: **DEERE & COMPANY, 1 John Deere Road, Moline Illinois 61265 (US)**

(72) Erfinder: **Brown, Douglas Paul, 5100 Coachman Road, Bettendorf Iowa 52722 (US)**
Erfinder: **Peck, Donald Ray, 2427 Third Street, Moline Illinois 61265 (US)**
Erfinder: **Burrough, Donald Lee, 3202 - 9th Street, Moline Illinois 61265 (US)**

(74) Vertreter: **Sartorius, Peter et al, DEERE & COMPANY European Office, Patent Department Postfach 503 Steubenstrasse 36-42, D-6800 Mannheim 1 (DE)**

(54) Bodenbearbeitungsgerät.

(57) Ein Bodenbearbeitungsgerät (10) weist sternförmig ausgebildete Bodenbearbeitungswerkzeuge (28, 29) auf, die mittels U-förmiger Bügel an vertikal verschwenkbaren Tragvorrichtungen (42–45) in zwei Reihen hintereinander und gruppenweise derart angeordnet sind, daß der Boden einwandfrei bearbeitet und Stoffe auf gleichmäßige Weise in den Boden eingemischt werden können. Hierzu sind die einzelnen Bodenbearbeitungswerkzeuge (28, 29) mit Bezug auf die Mittelachse (22) in der ersten Reihe (32) des Gerätes dachförmig und in der zweiten Reihe V-förmig zueinander ausgerichtet.

## Bodenbearbeitungsgerät

Die Erfindung bezieht sich auf ein Bodenbearbeitungsgerät mit sternförmigen, drehbar angeordneten Bodenbearbeitungswerkzeugen zum Bearbeiten des Bodens und zum Einmischen von Stoffen in den Boden, wobei die Bodenbearbeitungswerkzeuge mittels Tragvorrichtungen am Hauptrahmen des Gerätes gelagert und gruppenweise in einer ersten und einer nachfolgenden zweiten Reihe angeordnet sind und mit der sich in Fahrtrichtung erstreckenden Mittelachse einen spitzen Winkel einschließen, wobei der Winkel der Bodenbearbeitungswerkzeuge in der ersten Reihe entgegengesetzt zum Winkel der Bodenbearbeitungswerkzeuge in der zweiten Reihe verläuft.

Es ist bereits ein Kultivator bekannt (US-A- 231 582), der mit einem Hauptrahmen mit zinkenförmig ausgebildeten Bodenbearbeitungswerkzeugen ausgerüstet ist. Zwischen den einzelnen Zinken sind an nach unten offenen, U-förmigen Bügeln drehbar gelagerte, sternförmige Arbeitswerkzeuge angeordnet, die mit Bezug auf die Längsachse der Maschine V-förmig zueinander ausgerichtet sind und die lediglich die Aufgabe haben, in den Boden einzudringen, diesen zu öffnen, ohne dabei die Pflanzen zu bedecken.

Ferner ist eine Rotoregge mit drehbar gelagerten, sternförmig ausgebildeten Bodenbearbeitungswerkzeugen bekannt (US-A-3 232 356), die mittels Querträgern an Tragarmen des Gerätes angeordnet sind. Ein jeder Querträger ist mit fünf Bodenbearbeitungswerkzeugen ausgerüstet, die auf einer gemeinsamen Drehachse lagern, die die Längsmittelachse des Gerätes in einem spitzen Winkel schneidet.

Bei einem anderen Bodenbearbeitungsgerät der eingangs aufgeführten Art (US-A-4 033 270) sind die einzelnen Bodenbearbeitungswerkzeuge an einem Hauptrahmen in Gruppen angeordnet. Die Außenoberflächen der Bodenbearbeitungswerkzeuge aus der Gruppe in der ersten Reihe des Bodenbearbeitungsgerätes bilden mit der Längsmittelachse des Gerätes einen
nach vorne offenen Winkel, während die Außenoberflächen der
Bodenbearbeitungswerkzeuge der zweiten Gruppe in der zweiten Reihe einen nach hinten offenen Winkel mit der Längsmittelachse bilden. Die Bodenbearbeitungswerkzeuge der dritten Gruppe sind ähnlich wie die Bodenbearbeitungswerkzeuge
aus der ersten Gruppe und die Bodenbearbeitungswerkzeuge
aus der vierten Gruppe sind ähnlich wie die Bodenbearbeitungswerkzeuge aus der zweiten Gruppe angeordnet.

Die derart in Gruppen angeordneten Bodenbearbeitungswerzeuge bearbeiten den Boden nicht gleichmäßig, insbesondere
zwischen den einzelnen Gruppen, so daß keine kontinuierliche Durchmischung des Erdbodens, insbesondere mit den eingebrachten Stoffen, stattfindet. Darüber hinaus neigen die
außenliegenden Bodenbearbeitungswerkzeuge dazu, das Erdreich sowie die einzubringenden Stoffe von der Maschine
ungemischt fortzubewegen. Derartig angeordnete Bodenbearbeitungswerkzeuge erfordern darüber hinaus einen extrem
starken Rahmen, um die auf den Rahmen einwirkenden seitlichen Kräfte auffangen zu können. Daher sind derartige
Maschinen relativ groß und kompakt und somit teuer. In den
relativ eng angeordneten Zinken setzen sich ferner leicht
Pflanzenreste fest, so daß der Wirkungsgrad der Bodenbearbeitungswerkzeuge nach längerem Arbeitseinsatz sich verschlechtert.

Demgegenüber liegt der Erfindung die Aufgabe zugrunde, die
einzelnen Bodenbearbeitungswerkzeuge derart auszubilden
und an dem Gerät anzuordnen, daß eine gute Durchmischung
der in den Boden eingebrachten Stoffe möglich ist, wobei
eine gleichmäßige Bearbeitung des Bodens über die gesamte
Breite der Maschine gewährleistet wird. Diese Aufgabe ist
durch die im kennzeichnenden Teil des Anspruches 1 aufgeführten Merkmale gelöst. Durch die vorteilhafte Anordnung
der einzelnen in Gruppen angeordneten Bodenbearbeitungswerkzeuge wird eine gute Einmischung der Stoffe bzw. Chemikalien oder Saatgutteile in den Boden gewährleistet. Gleichzeitig wird verhindert, daß sich Pflanzen bzw. Wurzelreste in den Arbeitswerkzeugen festsetzen. Außerdem wird durch die vorteilhafte Anordnung der Bodenbearbeitungswerkzeuge ein geringerer Kraftaufwand bei gleichzeitiger guter Durchmischung des Bodens mit den Chemikalien möglich. Durch die einmal V-förmig zueinander ausgerichteten Bodenbearbeitungswerkzeuge in der ersten Reihe und die dachförmig angeordneten Bodenbearbeitungswerkzeuge in der zweiten Reihe des Gerätes sowie die auf der Mittelachse angeordneten Bodenbearbeitungswerkzeuge wird eine gleichmäßige Bearbeitung des Bodens ohne Zurücklassen eines unbearbeiteten Bodenstreifens gewährleistet. Ferner wird durch diese Anordnung eine gute Kräfteverteilung am Gerät erzielt, so daß nicht eine einseitige Belastung des Hauptrahmens des Gerätes eintritt und dadurch das Steuern des Bodenbearbeitungsgerätes mittels des Schleppers erschwert wird. Durch die überlappende Anordnung der hintereinander angeordneten Bodenbearbeitungswerkzeuge werden bei geringem Kraftbedarf des Zugfahrzeuges die Bodenwellen oder sonstige Unebenheiten auf einfache Weise beseitigt, wobei die Bodenbearbeitungswerkzeuge der ersten beiden Gruppen das Erdreich nach außen bewegen und die nachfolgenden Bodenbearbeitungswerkzeuge das Erdreich wieder nach innen bewegen und es dabei gleichzeitig gut durchmischen. Hierfür ist es vorteilhaft, daß die Gesamtbreite der Bodenbearbeitungswerkzeuge in der zweiten Reihe größer ist als die Gesamtbreite der Bodenbearbeitungswerkzeuge in der ersten Reihe, so daß die gesamte von dem Gerät überstrichene Fläche gleichmäßig bearbeitet wird, ohne daß Erntegut über die seitliche Begrenzung der Maschine hinaus bewegt wird. Durch die vorteilhafte Ausbildung der Bodenbearbeitungswerkzeuge mit den bogenförmig ausgebildeten Zinken wird gewährleistet, daß die Bodenbearbeitungswerkzeuge auch in einem Boden arbeiten können, der relativ viel Pflanzenreste bzw. Strohreste aufweist, wobei ein Teil dieser Pflanzenreste in den Boden eingemischt wird und ein anderer Teil auf der Bodenoberfläche liegenbleibt. Die vorteilhafte Ausbildung der einzelnen Zinken der Bodenbearbeitungswerkzeuge bewirkt neben einer guten Durchmischung und Einmischung der Chemikalien in den Boden gleichzeitig auch eine Durchtrennung der Pflanzenreste. Mit den erfindungsgemäßen Bodenbearbeitungswerkzeugen ist es ferner möglich, auf einer Bodenoberfläche mit einem großen Anteil von Rückständen an Pflanzenresten bzw. Strohanteilen zu arbeiten, die mittels der Bodenbearbeitungswerkzeuge in den Boden eingearbeitet werden, wobei ein bestimmter Bestandteil an Pflanzenresten auf der Oberfläche verbleiben kann. Durch die V-förmig bzw. dachförmig zueinander ausgerichteten und in Gruppen angeordneten Bodenbearbeitungswerkzeuge wird eine gute Kräfteverteilung am Hauptrahmen des Bodenbearbeitungsgerätes erreicht, so daß die Geradeausfahrt des Schleppers beim Einsatz der Bodenbearbeitungswerkzeuge nicht nachteilig beeinflußt wird. Durch die an der Außenseite des Gerätes vorgesehenen, im Durchmesser kleineren Bodenbearbeitungswerkzeuge wird im bestimmten Rahmen eine Tiefenkontrolle der Bodenbearbeitungswerkzeuge gewährleistet, so daß ein übermäßiges Eindringen der im Durchmesser größeren Bodenbearbeitungswerkzeuge verhindert wird.

Da die einzelnen Bodenbearbeitungswerkzeuge der einen Gruppe grundsätzlich entgegengesetzt zu den Bodenbearbeitungswerkzeugen der rechten bzw. nachfolgenden Gruppe ausgerichtet sind, wird innerhalb des gesamten Gerätes eine gleichmäßige Bearbeitung des Bodens erzielt, ohne daß dabei das Erntegut seitlich an der Maschine herausgeworfen wird. Vielmehr wird durch diese Anordnung gewährleistet, daß die Bodenbearbeitungswerkzeuge das Erntegut zuerst nach rechts und anschließend wieder nach links bewegen. Dies wird in vorteilhafter Weise dadurch erreicht, daß die Gesamtbreite aller Bodenbearbeitungswerkzeuge in der zweiten Reihe größer ist als die Gesamtbreite der Bodenbearbeitungswerkzeuge in der ersten Reihe.

Durch die Verwendung von Federeinrichtungen wird der gewünschte Anpreßdruck der Bodenbearbeitungswerkzeuge auf der Bodenoberfläche erzielt. Durch Verwendung des Anschlages, der auch am Rahmen des Gerätes herausnehmbar ist, läßt sich die Abwärtsbewegung des Bodenbearbeitungswerkzeuges begrenzen, wenn das gesamte Gerät angehoben wird. Durch die Herausnahme des Anschlages am Rahmen des Gerätes kann das Bodenbearbeitungswerkzeug bzw. die zugehörige Tragvorrichtung so weit herabgeschwenkt werden, daß die zugehörige Feder vollständig entspannt ist, um diese dann leichter zu montieren bzw. demontieren. Die Bodenbearbeitungswerkzeuge sind im einzelnen mit scharfen Außenkanten versehen, die auf einfache Weise die im Boden vorhandenen Pflanzenreste durchtrennen.

Weitere Ausgestaltungen der Erfindung gehen aus den Unteransprüchen hervor.

Im folgenden wird die Erfindung anhand von einen Ausführungsweg darstellenden Zeichnungen näher erläutert. Es zeigt:

Fig. 1      eine Draufsicht des Bodenbearbeitungsgerätes mit den erfindungsgemäßen Bodenbearbeitungswerkzeugen,

Fig. 2      eine perspektivische Rückansicht des Bodenbearbeitungsgerätes gemäß Fig. 1,

Fig. 3      eine Seitenansicht eines Bodenbearbeitungswerkzeuges des Bodenbearbeitungsgerätes gemäß Fig. 1,

Fig. 4      eine Schnittdarstellung des Bodenbearbeitungswerkzeuges entlang der Linie 4 - 4 gemäß Fig. 3,

Fig. 5a - 5e    Schnittdarstellungen entlang der Linien 5a - 5a bis 5e - 5e gemäß Fig. 3,

Fig. 6          eine Schnittdarstellung entlang der Linie 6
                - 6 gemäß Fig. 3,

Fig. 7          eine Seitenansicht des Bodenbearbeitungsgerätes gemäß Fig. 1.

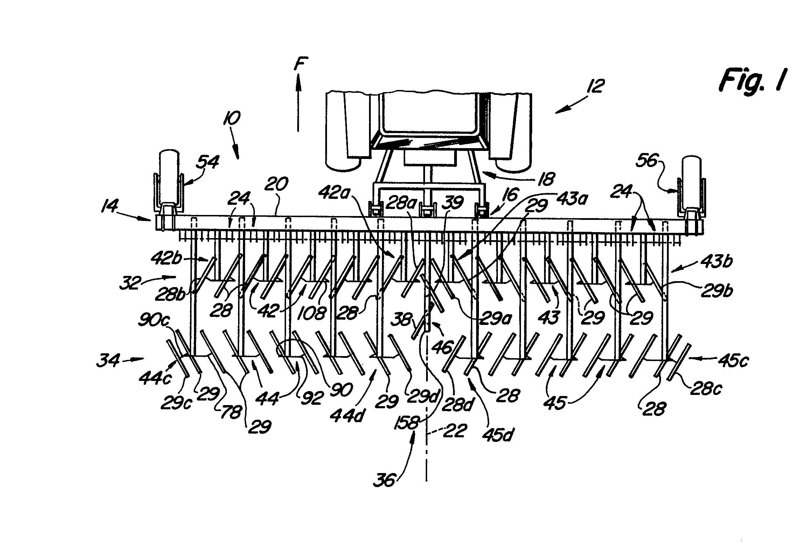

In der Zeichnung ist in Fig. 1 mit 10 ein Bodenbearbeitungsgerät bezeichnet, das an die Rückseite eines Schleppers 12
angeschlossen ist, der gemäß Pfeilrichtung F sich über ein
Feld nach vorne bewegt, in dem Chemikalien, beispielsweise
Düngemittel, oder Saatgut eingebracht sind. Das Bodenbearbeitungsgerät 10 weist einen Hauptrahmen 14 auf, der sich
mit Bezug auf die Fahrtrichtung F quer erstreckt, der mittels einer Anhängevorrichtung 16 an eine Kupplungsvorrichtung 18 des Schleppers 12 oder an ein anderes Zugfahrzeug
anschließbar ist. Der Hauptrahmen 14 besteht aus einem Querträger 20, der sich beiderseits einer sich in Fahrtrichtung
erstreckenden Mittelachse 22 symmetrisch erstreckt. Die
Mittelachse 22 entspricht der Längsmittelachse des Schleppers 12.

An der Rückseite des Querträgers 20 befinden sich zahlreiche Halterungen 24, die zum Anschluß von paarweise angeordneten Bodenbearbeitungswerkzeugen 28 und 29 dienen. Die
Bodenbearbeitungswerkzeuge 28 und 29 sind vorzugsweise spinnenförmige bzw. sternförmige Räder, die in zwei Reihen hintereinander angeordnet sind, wobei die erste Reihe 32 von
einer zweiten Reihe 34 gefolgt wird. Wie am besten aus Fig.
1 hervorgeht, weist die erste Reihe 32 einen ersten Satz
sternförmiger Bodenbearbeitungswerkzeuge 28 auf, die links
von der Mittelachse 22 angeordnet sind, sowie einen zweiten Satz Bodenbearbeitungswerkzeuge 29, die auf der rechten Seite der Mittelachse 22 angeordnet sind. Die Bodenbearbeitungswerkzeuge 28 und 29 sind über die gesamte Breite des Bodenbearbeitungsgerätes 10 mit gleichmäßigem Abstand zueinander angeordnet. Die Bodenbearbeitungswerkzeuge 28 des ersten Satzes sind auf je einer Achse angeordnet, die mit Bezug auf die Vorwärtsfahrt F einen spitzen Winkel mit der Mittelachse 22 einschließt. Die Bodenbearbeitungswerkzeuge 29 des zweiten Satzes sind ähnlich wie die Bodenbearbeitungswerkzeuge 28 mit gleichmäßigem Abstand zueinander angeordnet und ebenfalls auf je einer Drehachse angeordnet, die entgegengesetzt zur ersten Drehachse verläuft und die ebenfalls einen spitzen Winkel mit der Mittelachse 22 bildet. Wie die Draufsicht gemäß Fig. 1 ergibt, erstrecken sich die Achsen der vorderen Bodenbearbeitungswerkzeuge 28 in der ersten Reihe nach außen, während die Achsen der Bodenbearbeitungswerkzeuge 29 des zweiten Satzes in der ersten Reihe auf der rechten Seite der Mittelachse 22 sich entgegengesetzt zu den Bodenbearbeitungswerkzeugen 28 der ersten Gruppe nach außen erstrecken. Die zweite Reihe 34 der Bodenbearbeitungswerkzeuge 28 und 29 weist einen dritten Satz Bodenbearbeitungswerkzeuge 29 auf, die links von der Mittelachse 22 angeordnet sind, und einen vierten Satz Bodenbearbeitungswerkzeuge 28, die auf der rechten Seite der Mittelachse 22 angeordnet sind. Der dritte und vierte Satz der Bodenbearbeitungswerkzeuge 29 und 28 sind am Hauptrahmen 14 hinter dem ersten und zweiten Satz der Bodenbearbeitungswerkzeuge angeordnet, wobei die Achsen ebenfalls mit Bezug auf die Mittelachse 22 jeweils einen spitzen Winkel bilden. Die beiden Winkel der Bodenbearbeitungswerkzeuge 28 und 29 sind, wie aus Fig. 1 hervorgeht, entgegengesetzt zueinander ausgerichtet, so daß die Bodenbearbeitungswerkzeuge 29 und 28 V-förmig zueinander verlaufen. Die Bodenbearbeitungswerkzeuge 29 und 28 in der zweiten Reihe 34 sind so ausgerichtet, daß eine aufrechte, in Fahrtrichtung sich erstreckende Ebene, die durch das Zentrum beispielsweise eines Bodenbearbeitungswerkzeuges verläuft, den Bereich zwischen den Mittelpunkten der Bodenbearbeitungswerkzeuge 28 und 29 vor der zweiten Reihe 34 in gleiche Bereiche aufteilt. Der erste und zweite Satz der Bodenbearbeitungswerkzeuge 28 und 29 sind derart angeordnet, daß sie Erdgut von der Mittelachse 22 nach außen bewegen, während die dritten und vierten Sätze der Bodenbearbeitungswerkzeuge 29 und 28 Erdgut in Richtung der Mittelachse 22 bewegen. Die Bodenbearbeitungswerkzeuge 28 und 29 der ersten Reihe 32 sind mit Abstand zueinander und quer zur Fahrtrichtung angeordnet, so daß ein schmaler Streifen Erdgut zwischen den Bodenbearbeitungswerkzeugen unbearbeitet bleibt, wenn das Bodenbearbeitungsgerät 10 sich nach vorne gemäß Pfeilrichtung F bewegt. Die hinteren nachfolgenden Bodenbearbeitungswerkzeuge 29 und 28 sind auf diesen unbearbeiteten Streifen hin zentriert, so daß hierdurch eine Überlappung der Bearbeitungsflächen entsteht und eine gute Vermischung der in das Erdgut eingegebenen Chemikalien.

Damit verhindert wird, daß das Erdgut nicht ausreichend bearbeitet wird und mit Chemikalien durchmischt wird, insbesondere im Bereich um die Mittelachse 22 des Bodenbearbeitungsgerätes 10 mittels der gegenüberliegenden, winklig angeordneten Bodenbearbeitungswerkzeuge 28 und 29, ist eine spezielle Einrichtung bzw. Anordnung der Bodenbearbeitungswerkzeuge bei 36 im Bereich der Mittelachse 22 vorgesehen (Fig. 1). Hierzu gehört ein erstes auf der Mittelachse 22 angeordnetes Bodenbearbeitungswerkzeug 39, das ein wenig rechts von der Mittelachse 22 angeordnet ist und um eine Achse dreht, die in etwa parallel zur Drehachse des Bodenbearbeitungswerkzeuges 29 der ersten Reihe 32 verläuft. Das Bodenbearbeitungswerkzeug 39 liegt etwas hinter der ersten Reihe der Bodenbearbeitungswerkzeuge 28 und 29. Ein zweites mittig angeordnetes einzelnes Bodenbearbeitungswerkzeug 38 befindet sich hinter dem ersten Bodenbearbeitungswerkzeug 39 und ist etwas links versetzt mit Bezug auf die Mittelachse 22 angeordnet. Die Drehachse des Bodenbearbeitungswerkzeuges 38 bildet mit der Mittelachse 22 einen nach hinten offenen spitzen Winkel, der entgegengesetzt zum Winkel des ersten Bodenbearbeitungswerkzeuges 39 ausgerichtet ist und der ebenfalls zwischen dem Bodenbearbeitungswerkzeug und der Mittelachse gebildet wird. Das erste einzelne Bodenbearbeitungswerkzeug 39 neigt dazu, das Erdreich von der Mittelachse nach rechts zu bewegen, während das zweite Bodenbearbeitungswerkzeug 38 das Erdgut mit Bezug auf die Mittelachse 22 in die entgegengesetzte Richtung bewegt. Die innenliegenden Bodenbearbeitungswerkzeuge 28a und 29a in der ersten Reihe 32 liegen beiderseits der Mittelachse 22 und weisen einen derart großen Abstand untereinander auf, daß sie einen kleinen Streifen unbearbeitetes Erdgut zurücklassen. Die beiden Bodenbearbeitungswerkzeuge 28a und 29a sind dachförmig zueinander ausgerichtet, während die beiden innenliegenden Bodenbearbeitungswerkzeuge 29d und 28d in der zweiten Reihe 34 V-förmig zueinander ausgerichtet sind. Die innenliegenden Bodenbearbeitungswerkzeuge 29d und 28d der zweiten Reihe 34 sind ebenfalls mit Bezug auf die Mittelachse 22 etwas nach außen versetzt angeordnet, so daß das von den Bodenbearbeitungswerkzeugen 28a und 29a nach außen geworfene Erdgut über die Bodenbearbeitungswerkzeuge 28d und 29d wieder nach innen bewegt wird.

Die meisten Bodenbearbeitungswerkzeuge 28 und 29 weisen einen gleichen Durchmesser auf. Jedoch sind die Bodenbearbeitungswerkzeuge 28a, 29a und 29d, 28d beiderseits der Mittelachse 22 in der ersten und zweiten Reihe 32 und 34 etwas kleiner als die angrenzenden bzw. benachbarten Bodenbearbeitungswerkzeuge 28, 29 und 29, 28. Die ganz außen liegenden Bodenbearbeitungswerkzeuge 28b und 29b haben einen wesentlich kleineren Durchmesser als die angrenzenden Bodenbearbeitungswerkzeuge 28 und 29, so daß der Betrag des nach außen geworfenen Erdgutes in der ersten Reihe 32 begrenzt wird. Die außenliegenden Bodenbearbeitungswerkzeuge 28c und 29c der zweiten Reihe 34 sind ebenfalls etwas kleiner als die angrenzenden Bodenbearbeitungswerkzeuge 28 und 29, um den Effekt der schräg gestellten Bodenbearbeitungswerkzeuge am Ende des Bodenbearbeitungsgerätes abzuschwächen. Die Anordnung 36 der kleineren, mittig angeordneten Bodenbearbeitungswerkzeuge 28a, 29a, 29d, 28d, 38 und 39 beseitigt wieder den mittleren Streifen nicht bearbeiteten Erdgutes, so daß eine gleichmäßige Bearbeitung des Erdgutes und Einbringung der Chemikalien in das Erdgut auf der gesamten vom Bodenbearbeitungsgerät überfahrenen Fläche bewirkt wird.

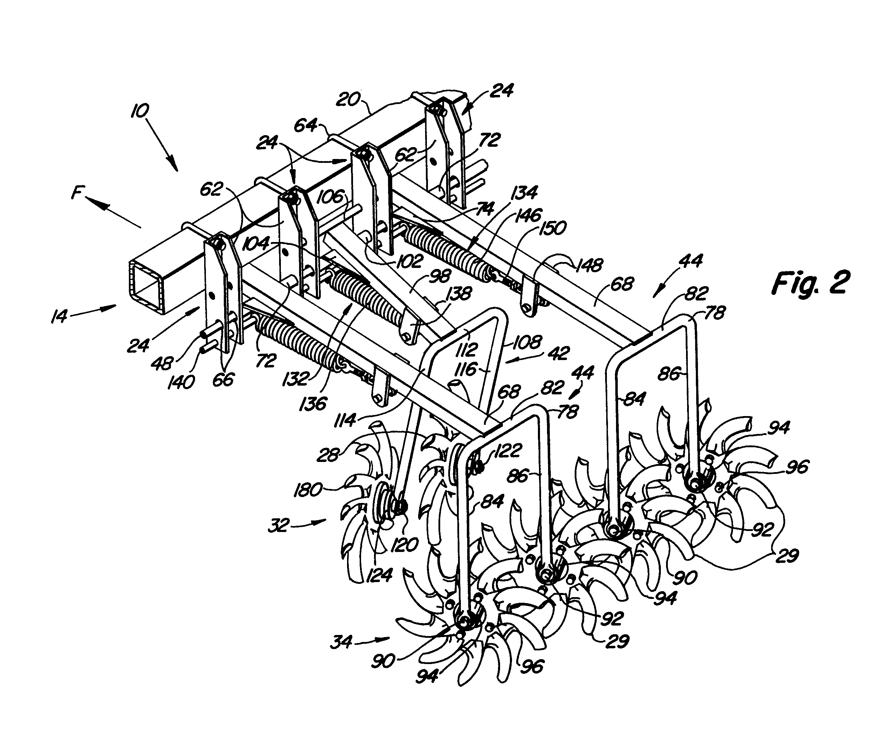

Wie aus Fig. 1 hervorgeht, sind die Bodenbearbeitungswerkzeuge 28 und 29 in der ersten Reihe 32 mit gleichmäßigem Abstand zueinander angeordnet und paarweise in Tragvorrichtungen 42 und 43 aufgenommen. Die Bodenbearbeitungswerkzeuge 29 und 28 in der zweiten Reihe 34 werden von Tragvorrichtungen 44 und 45 aufgenommen, die vertikal schwenkbar am Hauptrahmen 14 angeschlossen sind. Eine mittig angeordnete Tragvorrichtung 46 dient zur Aufnahme von Bodenbearbeitungswerkzeugen 38 und 39 zwischen den innenliegenden Tragvorrichtungen 42a und 43a der ersten Reihe 32 und zwischen den innenliegenden Tragvorrichtungen 44d und 45d der zweiten Reihe 34. Die Tragvorrichtungen 42 bis 46 sind an einer Achse 48 (siehe Fig. 2) schwenkbar angeschlossen, die an der Rückseite des Querträgers 20 des Hauptrahmens 14 in Halterungen 24 aufgenommen ist. Vertikal einstellbare Laufradeinrichtungen 54 und 56 befinden sich links und rechts am äußeren Ende des hohlförmig ausgebildeten Querträgers 20, so daß das Bodenbearbeitungsgerät 10 sich auf den Laufradeinrichtungen abstützen kann, wenn das Gerät in eine Arbeitsstellung abgesenkt wird. Die Tragvorrichtungen 43 und 45 auf der rechten Seite des Bodenbearbeitungsgerätes 10 sind spiegelbildlich zu den Tragvorrichtungen 42 und 44 angeordnet. Aus diesem Grunde sind lediglich die auf der linken Seite des Bodenbearbeitungsgerätes 10 angeschlossenen Tragvorrichtungen im Detail beschrieben. Wie aus Fig. 2 hervorgeht, weist eine jede Halterung 24 einen vertikal verlaufenden Träger 62 auf, der U-förmig ausgebildet ist und dessen Schenkel nach hinten gerichtet sind. Ein jeder Träger 62 ist mittels U-förmiger Schraubenbolzen 64 an die Rückseite des Querträgers 20 angeschlossen. Das untere Ende des U-förmigen Trägers 62 erstreckt sich unterhalb der Unterseite des Querträgers 20 und weist Bohrungen
66 zur Aufnahme der Achse 48 auf. Die Tragvorrichtung 44
ist mit einem sich in Fahrtrichtung (F) erstreckenden Tragarm 68 ausgestattet, der einen rechteckförmigen Querschnitt
aufweist. An den Boden des Tragarmes 68 sind zylinderförmige Buchsen 72 angeschweißt, die auf die Achse 48 aufgeschoben sind. Eine Strebe 74 verbindet die Oberseite der Buchse 72 mit der Außenseite des Tragarmes 68. Wie aus Fig. 2
hervorgeht, sind die einzelnen Halterungen 24 mit einem
Abstand zueinander angeordnet, so daß in diesem Zwischenraum auf der Achse 48 die Buchsen 72 sitzen. Somit können
die Tragarme 68 mittels der Buchsen 72 auf der Achse 48
schwenken. Das vordere Ende des Tragarmes 68 erstreckt
sich unterhalb des Bodens des Querträgers 20, so daß hierdurch eine Anlage geschaffen wird, die verhindert, daß der
Tragarm weiter nach unten fällt, wenn der Hauptrahmen 14
in eine Transportstellung angehoben wird.

Ein U-förmig ausgebildeter Bügel 78 besteht aus einem oberen Steg 82 mit vertikal verlaufenden rechten und linken
Schenkeln 84 und 86. Die unteren Enden der Schenkel 84 und
86 dienen zur Aufnahme von Achsen 90 und 92. Die Bodenbearbeitungswerkzeuge weisen je eine Nabe 94 auf, die mittels in der Zeichnung nicht dargestellter Lager auf der
Achse 90 bzw. 92 angeordnet ist. Die Naben 94 sind mittels
Schraubenbolzen 96 an die Bodenbearbeitungswerkzeuge 29
angeschlossen. Die Naben 94 stehen von den Bodenbearbeitungswerkzeugen 29 seitlich heraus, so daß die Innenoberfläche des Bodenbearbeitungswerkzeuges zu der Außenseite
des Schenkels 84 bzw. 86 einen ausreichenden Abstand aufweist, so daß sich keine Erntegutreste zwischen dem Bodenbearbeitungswerkzeug und dem Schenkel festsetzen können.

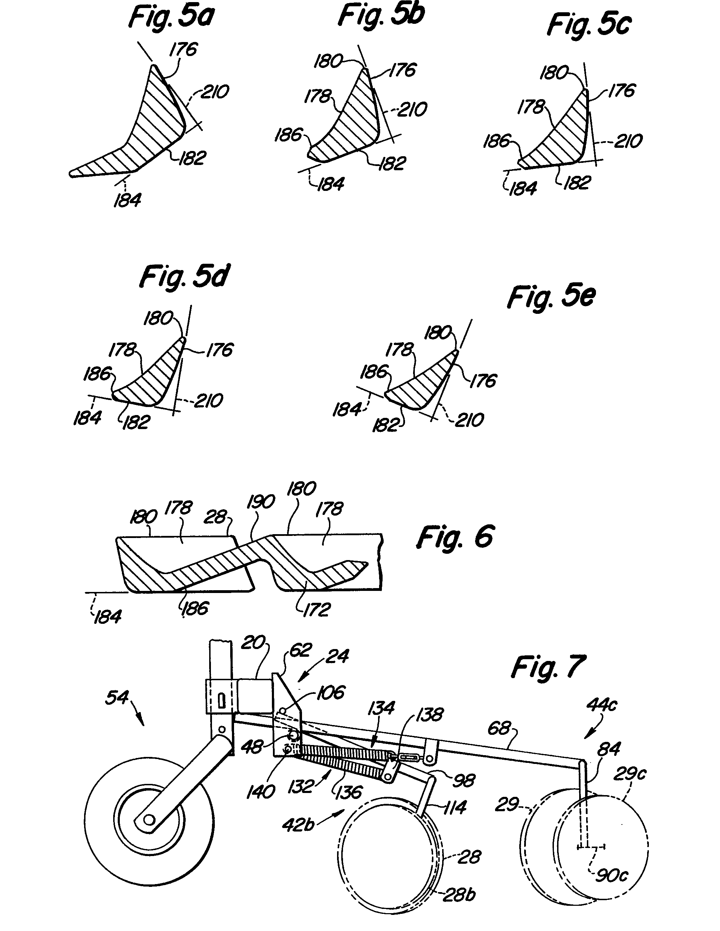

Die Tragvorrichtungen 42 entsprechen in etwa den Tragvorrichtungen 44 und weisen einen Tragarm 98 auf, der an eine
zylindrische Buchse 102 angeschlossen ist. Zur Verstärkung der Anschlußstelle des Tragarmes 98 ist eine Strebe einenends an den Tragarm und anderenends an die Buchse 102 angeschlossen. Die Buchse 102 ist ebenfalls auf der Achse 48 angeordnet, so daß der Tragarm 98 auf der Achse 48 vertikal schwenkbar lagert. Das vordere Ende des Tragarmes 98 erstreckt sich etwas vor die Achse 48 und endet kurz vor der Unterseite des Querträgers 20 (siehe Fig. 7). Ein Anschlag 106 ist zwischen den Halterungen 24 vorgesehen, der sich oberhalb des vorderen Endes des Tragarmes 98 befindet und somit die Schwenkbewegung des Tragarmes 98 nach unten begrenzt, wenn der Hauptrahmen 14 in eine Transportstellung angehoben wird. Ein U-förmig ausgebildeter Bügel 108 besteht aus einem oberen quer verlaufenden Steg 112, an den sich rechts und links zwei vertikal verlaufende Schenkel 114 und 116 anschließen. An den unteren Enden der beiden Schenkel 114 und 116 ist je eine Achse 120 und 122 vorgesehen, die zur Aufnahme von Naben 124 der Bodenbearbeitungswerkzeuge 28 dienen. Die beiden Achsen 120, 122 zur drehbaren Aufnahme der Bodenbearbeitungswerkzeuge 28 in der ersten Reihe 32 verlaufen parallel zueinander, so daß das Erdgut mit Bezug auf die Mittelachse 22 des Bodenbearbeitungsgerätes 10 nach außen bewegt wird. Die Achsen 90 und 92 der Bodenbearbeitungswerkzeuge in der zweiten Reihe 34 sind so ausgerichtet, daß das Erdgut nach innen in Richtung der Mittelachse 22 der Maschine bewegt wird. Wie aus Fig. 2 hervorgeht, sind die U-förmigen Bügel 78 an den Tragarmen 68 nach innen versetzt (d. h. mit Bezug auf die Blickrichtung gemäß Fig. 2 nach rechts). Der Bügel 108 ist ebenfalls mit Bezug auf diese Blickrichtung nach innen versetzt. Die Bodenbearbeitungswerkzeuge 29 an dem hinteren Bügel 78 sind an der rechten Innenseite der Schenkel 84 und 86 vorgesehen, während die Bodenbearbeitungswerkzeuge 28 des Bügels 108 an der gegenüberliegenden äußeren Seite der Schenkel 114, 116 vorgesehen sind. Das äußerste Bodenbearbeitungswerkzeug 28 der Tragvorrichtung 42 ist mit Bezug auf die beiden nachfolgenden Bodenbearbeitungswerkzeuge 29 der nächsten Tragvorrichtung 44 mittig ausgerichtet, während das innerste Bodenbearbeitungswerkzeug 28 der Tragvorrichtung 42 zwischen den innenliegenden Bodenbearbeitungswerkzeugen 29 der angrenzenden Tragvorrichtung 44 liegt.

Federeinrichtungen 132 und 134 sind einenends an den Hauptrahmen 14 und anderenends an die Tragvorrichtung 42 und 44
angeschlossen und drücken die entsprechenden Bodenbearbeitungswerkzeuge 28 und 29 auf den Boden. Die Federeinrichtung 132 weist eine Feder 136 auf, die einenends an eine an
der Unterseite des Tragarmes 98 vorgesehene Halterung 138
und anderenends an ein Anschlußgestänge 140 angeschlossen
ist, das am unteren Teil der Halterung 24 unterhalb der
Achse 48 vorgesehen ist. Die Federeinrichtung 134 weist
ebenfalls eine Feder 146 auf, die einenends mittels einer
Spannschraube 150 an die Halterung 148 und anderenends an
ein Gestänge 140 angeschlossen ist. Die Feder 136 ist so
ausgelegt, daß sie einen dreimal größeren Druck auf die
vordere Reihe der Bodenbearbeitungswerkzeuge 28 ausübt, und
zwar im Vergleich mit dem nach unten gerichteten Druck auf
die Bodenbearbeitungswerkzeuge 29 der zweiten Reihe 34.
Eine zusätzliche Feder 136 kann zwischen der Halterung 138
und dem Anschlußgestänge 140 vorgesehen sein, um die notwendige abwärts gerichtete Stellkraft zu erreichen. In vielen Situationen kann es jedoch so sein, daß die Feder 146
für die hintere Tragvorrichtung 44 beseitigt werden kann,
da das Gewicht der Bodenbearbeitungswerkzeuge ausreicht,
so daß keine zusätzliche Stellkraft notwendig ist, um den
entsprechenden Bodendruck für die Bodenbearbeitungswerkzeuge 29 zu erreichen.

Die innenliegenden Bodenbearbeitungswerkzeuge 28a und 29a
(Fig. 1) der Tragvorrichtungen 42a und 43a sowie die Bodenbearbeitungswerkzeuge 29d, 28d der Tragvorrichtungen 44d
und 45d beiderseits der Mittelachse 22 sind kleiner als
die außenliegenden Arbeitswerkzeuge der gleichen Einrichtung. Somit tragen die außenliegenden Bodenbearbeitungswerkzeuge dazu bei, die Eindringtiefe der innenliegenden Bodenbearbeitungswerkzeuge zu begrenzen, so daß der Anteil des Erdgutes, das durch die innenliegenden Bodenbearbeitungswerkzeuge hochgeworfen wird, reduziert wird. Die geringere Arbeitstiefe, die durch die kleineren Bodenbearbeitungswerkzeuge herbeigeführt wird, bewirkt ein besseres Durcharbeiten bzw. Durchkämmen des Erdgutes mittels der Zähne, wenn diese durch den Boden bewegt werden.

Die mittig angeordneten Bodenbearbeitungswerkzeuge 38 und 39 sind auf einem mittig angeordneten Tragarm 158 angeordnet, der ähnlich wie die Tragarme 68 an der Achse 48 schwenkbar angeschlossen ist. Der Tragarm 158 ist dabei kürzer als die Tragarme 68. Eine nach unten gerichtete Stellkraft wird ebenfalls über eine Federeinrichtung 132 ausgeübt, so daß die Bodenbearbeitungswerkzeuge in den Boden hineingedrückt werden. Das vordere Bodenbearbeitungswerkzeug 39 ist auf einer Seite an das untere Ende eines in der Zeichnung nicht dargestellten Schenkels angeschlossen, der an den mittleren Teil des Tragarmes 158 angeschlossen ist und der zur drehbaren Aufnahme des Bodenbearbeitungswerkzeuges 39 dient. Die Drehachse des Bodenbearbeitungswerkzeuges 39 verläuft in etwa parallel zur Drehachse des Bodenbearbeitungswerkzeuges 29 der Tragvorrichtung 43. Das hintere einzelne Bodenbearbeitungswerkzeug 38 ist an das untere Ende eines zweiten Schenkels angeschlossen, der sich links und hinter einem ersten Schenkel befindet. Das untere Ende des Schenkels nimmt das Bodenbearbeitungswerkzeug 38 drehbar auf, das sich um eine Achse dreht, die parallel zur Drehachse des Bodenbearbeitungswerkzeuges 28 der Tragvorrichtung 42 verläuft. Der Netto-Auswärtsfluß des Erdgutes aus dem Bereich um die Mittelachse 22, der durch die nach außen abgewinkelten größeren Bodenbearbeitungswerkzeuge 28a, 29a, 38 und 39 hervorgerufen wird, entspricht in etwa dem Netto-Inwärtsfluß des Erdgutes, der durch die Bodenbearbeitungswerkzeuge 28, 28d, 29 und 29d der Tragvorrichtungen 44d, 45d hervorgerufen wird, die in der Nähe der Mittelachse 22 liegen. Die kleineren außenliegenden Bodenbearbeitungswerkzeuge 28b, 29b der ersten Reihe 32, die in der Eindringtiefe durch die größeren Bodenbearbeitungswerkzeuge 29 der Tragvorrichtungen 42b und 43b begrenzt sind, neigen dazu, den Betrag des Erdgutes, der nach außen geworfen wird, am Ende der ersten Reihe 32 zu begrenzen. Die außenliegenden Bodenbearbeitungswerkzeuge 29 und 29c der Tragvorrichtung 44c und die Bodenbearbeitungswerkzeuge 28 und 28c der Tragvorrichtung 45c in der zweiten Reihe 34 sind beide außerhalb der korrespondierenden Bodenbearbeitungswerkzeuge 28b und 29b angeordnet, um einen nach innen gerichteten Erntegutfluß aus der zweiten Reihe 34 zu haben, der im wesentlichen gleich dem Netto-Auswärtsfluß des Erntegutes in der ersten Reihe 32 ist. Die größeren Bodenbearbeitungswerkzeuge 28 und 29 der Tragvorrichtung 45c und 44c halten die kleineren korrespondierenden Bodenbearbeitungswerkzeuge 28c und 29c an den äußeren Enden des Bodenbearbeitungsgerätes 10 so, daß sie nicht zu weit in den Boden eindringen, so daß diese den Boden entsprechend durcharbeiten bei gleichzeitiger Abschwächung der Winkelstellung der Bodenbearbeitungswerkzeuge.

Die Bodenbearbeitungswerkzeuge 28a und 29a sind mit einem derart großen Abstand zueinander angeordnet, daß ein kleiner Anteil des Erdgutes zwischen den Bodenbearbeitungswerkzeugen unbearbeitet bleibt. Durch die Reduzierung der Größe der Bodenbearbeitungswerkzeuge 28a und 29a wird das von den Bodenbearbeitungswerkzeugen bearbeitete Erdgut nicht von der Mittelachse 22 nach außen geworfen, wie das bei den größeren Bodenbearbeitungswerkzeugen 28 und 29a der Fall wäre. Die Bodenbearbeitungswerkzeuge 39 und 38 bearbeiten den Streifen, der von den Bodenbearbeitungswerkzeugen 28a und 29a nicht bearbeitet worden ist, so daß das Erdgut aus diesem Streifen über die Bodenbearbeitungswerkzeuge geteilt und nach außen geworfen wird. Da jedoch die Bodenbearbeitungswerkzeuge 39 und 38 einen relativ kleinen Durchmesser aufweisen, wird das meiste Erdgut nicht über die nachfolgenden Bodenbearbeitungswerkzeuge 29d und 28d seitlich hinausbewegt. Die mit großem Abstand zueinander angeordneten kleineren Bodenbearbeitungswerkzeuge bearbeiten den Boden zwischen den Sätzen der Bodenbearbeitungswerkzeuge in der hinteren Reihe 34, um somit eine Hügelbildung zu vermeiden. Die Anordnung der sechs im Durchmesser kleineren Bodenbearbeitungswerkzeuge 28a, 29a, 39, 38, 29d und 28d verhindert somit eine Hügelbildung des Erdgutes und gewährleistet, daß genug Erdgut im Bereich der Mittelachse verbleibt, so daß eine gleichmäßige verarbeitete Fläche gebildet wird. Durch die vorteilhafte Anordnung der Bodenbearbeitungswerkzeuge erhält man eine gute Bearbeitung des Bodens, ohne daß seitliche Schubkräfte oder dergleichen auf den Hauptrahmen 14 wirken.

Die Ausbildung und Anordnung der Tragvorrichtung 44c (und somit auch der Tragvorrichtung 45c, die spiegelbildlich zur Tragvorrichtung 44c angeordnet ist) ist im wesentlichen der Tragvorrichtung 44 gleich, mit der Ausnahme der Achse 90c, die sich durch das untere Ende des Schenkels 84 erstreckt und das im Durchmesser kleinere Bodenbearbeitungswerkzeug 29c außerhalb des Schenkels 84 trägt. Die Ausbildung der vorderen Tragvorrichtung 42b (und somit 43b) ist im wesentlichen der Tragvorrichtung 42 (43) gleich, mit der Ausnahme, daß das äußere Bodenbearbeitungswerkzeug 28b (29b) kleiner als das korrespondierende innere Bodenbearbeitungswerkzeug 28 (29) ist. Ebenfalls sind auch die Tragvorrichtungen 42a und 44d gleich den Tragvorrichtungen 42 und 44, wobei nur die inneren Bodenbearbeitungswerkzeuge 28a und 29d kleiner sind.

Die Bodenbearbeitungswerkzeuge sind größer ausgebildet und unterscheiden sich somit von konventionellen Rotoreggen mit den entsprechenden drehbaren Arbeitswerkzeugen, so daß hier eine bessere Rollwirkung der Bodenbearbeitungswerkzeuge erzielt wird und somit eine gute Bodendurcharbeitung und Einbringung der Chemikalien und anderer Teile in den Boden. Ferner wird eine bessere Reinigungswirkung auch im Zusammenhang mit den Unkräutern erzielt als bei den bisher bekannten Bodenbearbeitungswerkzeugen von Rotoreggen. Die Bodenbearbeitungswerkzeuge 28 sind als links wirkende Bodenbearbeitungswerkzeuge ausgebildet, da sie das Erdgut von der rechten Seite zur linken Seite bewegen, und zwar spiegelbildlich zur Wirkung der Bodenbearbeitungswerkzeuge 29, die das Erdgut von der linken Seite zu der rechten Seite bewegen. Die im Durchmesser kleineren Bodenbearbeitungswerkzeuge 28a bis 28d und 38 sind im wesentlichen untereinander gleich und weisen einen kleineren Durchmesser als die Bodenbearbeitungswerkzeuge 28 auf. Die Bodenbearbeitungswerkzeuge 29a bis 29b und 39 sind ebenfalls einander gleich und entsprechen auch den Bodenbearbeitungswerkzeugen 29, jedoch weisen sie gegenüber diesen einen kleineren Durchmesser auf. Da die Bodenbearbeitungswerkzeuge nach den gleichen Konstruktionsprinzipien ausgelegt sind, ist lediglich das größere links wirkende Bodenbearbeitungswerkzeug 28 im Detail nachfolgend beschrieben, zumal das rechts wirkende Bodenbearbeitungswerkzeug 29 spiegelbildlich zum Bodenbearbeitungswerkzeug 28 ausgelegt ist.

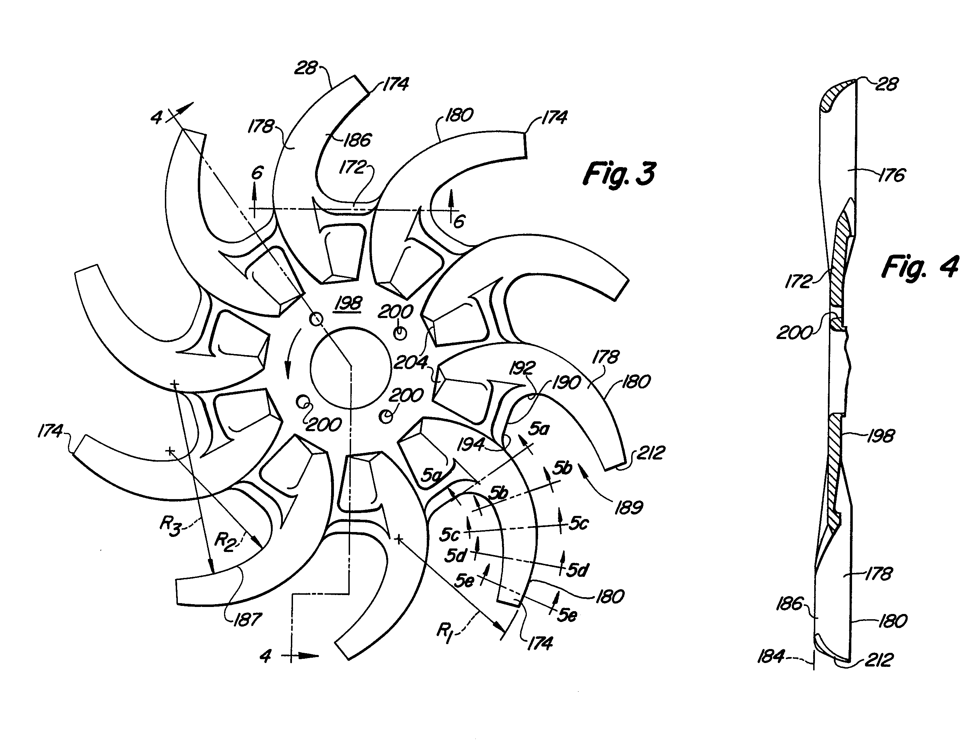

Wie aus den Figuren 3 bis 6 hervorgeht, weist das Bodenbearbeitungswerkzeug 28 einen Nabenteil 172 auf, an dem sich radial erstreckende Zinken 174 angeordnet sind, die mit Bezug auf die Drehrichtung (Pfeilrichtung) nach hinten abgebogen sind, wobei der Radius des abgebogenen Teils kleiner ist als der Radius des Bodenbearbeitungswerkzeuges 28. Die Zinke 174 weist eine stumpfe Rückseite 176 und eine nach vorne gerichtete konkave Arbeitsfläche 178 auf. Die Rückseite 176 und die Arbeitsfläche 178 laufen zu einem spitzen Winkel zusammen und enden in einer runden Kante 180 (Fig. 5a bis 5e). Eine relativ flache Seite 182 befindet sich gegenüber der Kante 180. Die flache Seite 182 liegt in etwa in der Ebene 184 des Bodenbearbeitungswerkzeuges 28. Die Arbeitsfläche 178 weist einen nach vorne gerichteten Lippenteil 186 auf, der sich im Bereich der Seite 182 befindet und der eine gute Durcharbeitung des Erdgutes und Vermischung der einzubringenden Teile bewirkt. Die Kante 180 liegt im wesentlichen auf einem Radius $R_1$ (siehe Fig. 3), wobei der Radiusmittelpunkt im Bereich der Verdickung bzw. des unteren Endes der Zinke 174
liegt (siehe Fig. 3). Der Lippenteil 186 liegt auf einem
Radius $R_2$, der in etwa dem Radius $R_1$ entspricht und der
seinen Mittelpunkt außerhalb des Nabenteiles 172 hinter
der Rückseite der Zinke 174 aufweist (siehe Fig. 3). Im
Bereich 187 (siehe Fig. 3) verläuft die Kurve des hinteren
Teils der Zinke ansteigend, d. h. sie wird größer und geht
in den Radius $R_3$ über, der wesentlich größer ist als die
Radien $R_1$ und $R_2$. Der Mittelpunkt des Radius $R_3$ liegt in
etwa auf der Kante 180 der Zinke 174 außerhalb des Nabenteiles 172. Die besondere Ausbildung und Anordnung der einzelnen Zinken 174 schafft einen relativ weiten Raum bzw.
Auskehlung 189 zwischen zwei benachbarten Zinken, die eine
U-Form aufweist, wobei der Abstand bzw. der Zwischenraum
im Bereich der unteren Enden der benachbarten Zinken 174
kleiner ist als im äußeren Bereich. Hierdurch wird die
Keilwirkung der Zinken verbessert und gleichzeitig erreicht, daß Pflanzenreste oder dergleichen ohne weiteres
aus dem Zwischenraum bzw. aus der Auskehlung 189 herausgleiten können. Verlassen die Zinken 174 gemäß Fig. 3 den
Boden, so ist der Zwischenraum bzw. die Auskehlung 189 zwischen den Zinken 174 nach unten gerichtet, so daß Erntegut
bzw. Pflanzenreste ohne weiteres nach unten fallen können.
Die Auskehlung 189 besteht aus einem Bodenteil 190, der
zwischen zwei benachbarten Zinken 174 liegt (siehe Fig. 3
und 6), wobei der Bodenteil 190 an den hinteren Teil der
Zinke 174 mittels eines relativ großen Bogens 192 und an
die vordere Kante 180 mittels eines kleineren Bogens 194
angeschlossen ist. Hierdurch wird ferner die Keilwirkung
der Zinken in diesem Bereich vermindert. Der Bodenteil 190
ist etwa messerartig ausgebildet, so daß die Pflanzenreste
ohne weiteres durchschnitten werden können. Der Bodenteil
190 erstreckt sich von der Kante 180 im Bereich der Nabe
der Zinke 174 diagonal (siehe Fig. 6) zum Lippenteil 186 am Bodenteil der nächstfolgenden Zinke 174. Die gekrümmte
Kante 180 erstreckt sich bis zum Mittelteil 198, der mit
Bohrungen 200 versehen ist, die zur Aufnahme von Schraubenbolzen 96 dienen. Die Arbeitsfläche 178 geht allmählich
in den Nabenteil 172 über und endet in dem Mittelteil 198.

Der Querschnitt der Zinke 174 ist am besten aus den Figuren 5a bis 5e zu entnehmen. Wie aus den Figuren 5a bis 5e
sowie 4 hervorgeht, ist die Zinke 174 um ihre Längsachse
um 90$^{\circ}$ nach außen auf der Krümmung nach dem Radius $R_1$ gedreht. Dabei nimmt der Querschnitt der Zinke 174 in Richtung des Mittelteils 198 zu. Die Rückseite 176 der Zinke
174, die zuerst in den Boden eingreift, bildet mit der Horizontalen bzw. der Standfläche der Maschine einen relativ
flachen Winkel. Die Linie 210 (Fig. 5a bis 5e), die an der
Rückseite 176 vorbeiläuft, verläuft parallel zur Drehachse
des Bodenbearbeitungswerkzeuges 28. Der Winkel zwischen
der Linie 210 gemäß Fig. 5a und der Rückseite 176 beträgt
ca. 13$^{\circ}$ oder weniger. Beispielsweise kann der Winkel zwischen der Linie 210 und der Rückseite 176 gemäß Fig. 5a
10$^{\circ}$, gemäß Fig. 5b 9$^{\circ}$, gemäß Fig. 5c 10$^{\circ}$, gemäß Fig. 5d
13$^{\circ}$ und gemäß Fig. 5e 11$^{\circ}$ aufweisen. Der Winkel der Arbeitsfläche 178 im Bereich der Kante 180 mit Bezug auf die
Linie bzw. Ebene 184 (Ebene des Bodenbearbeitungswerkzeuges) nimmt von 37$^{\circ}$ im Bereich des Nabenteiles der Zinke
174 auf 55$^{\circ}$ im Bereich der Spitze der Zinke 174 zu. Der
Winkel zwischen der Ebene 184 gemäß Fig. 5 und der Arbeitsfläche 178 im Bereich der Kante 180 beträgt ca. 37$^{\circ}$ gemäß
Fig. 5a, 35$^{\circ}$ gemäß Fig. 5b, 45$^{\circ}$ gemäß Fig. 5c, 50$^{\circ}$ gemäß
Fig. 5d und 55$^{\circ}$ gemäß Fig. 5e. Die Zinke 174 enthält eine
äußere Zinkenspitze 212. Die Rückseite 176 im Bereich der
Zinkenspitze 212 bildet mit der rechtwinklig zur Ebene 184
verlaufenden Ebene einen Winkel von ca. 21$^{\circ}$. Die Ebene 184
verläuft durch den äußersten Teil der Kante 180. Die zuvor
beschriebene Zinkenausbildung trägt nicht nur dazu bei, daß
eine gute Durchmischung des Erdgutes im Arbeitseinsatz herbeigeführt wird; sondern gewährleistet einen gleichmäßig guten Antrieb des Bodenbearbeitungswerkzeuges, wenn die relativ stumpfe Rückseite 176 in den Boden eintritt. Bewegen sich die Zinken 174 durch den Boden mit Bezug auf die nach vorne versetzte Achse, so bewegen sich die Zinken seitlich in dem Boden in Richtung der Kante 180 und bewegen dadurch das Erdgut sowie die Chemikalien in dieselbe Richtung, wobei ein Teil des Erdgutes und der Chemikalien an den Zinken bzw. zwischen die Zinken hindurchgleitet. Der relativ große Nabenteil 172 steuert die Eindringtiefe und verhindert, daß die Bodenbearbeitungswerkzeuge als vollwandige Scheibeneggen wirken und dadurch die Vermischung der Chemikalien im Boden reduzieren.

Der Durchmesser des Bodenbearbeitungswerkzeuges 28 ist wesentlich größer als der Durchmesser einer herkömmlichen Scheibenegge. Das Bodenbearbeitungswerkzeug 28 weist nicht mehr als zehn einen gleichmäßigen Abstand untereinander aufweisende Zinken 174 auf, die an dem Nabenteil 172 angeordnet sind, so daß zwischen den einzelnen Zinken 174 ein ausreichender Abstand bleibt, so daß Pflanzenreste ohne weiteres von den Zinken abgestreift werden können bzw. sich durch den zwischen den Zinken gebildeten Zwischenraum bewegen. Die im mittleren Bereich und am Ende des Gerätes vorgesehenen Bodenbearbeitungswerkzeuge sind ca. 10 % kleiner bzw. weisen einen Durchmesser von 450 mm auf. Der Durchmesser des Nabenteils 172 ist etwas größer als der Halbdurchmesser des Bodenbearbeitungswerkzeuges. Das Bodenbearbeitungswerkzeug 28 weist einen Nabenteildurchmesser von ca. 280 mm auf. Die Radien $R_1$ und $R_2$ sind etwas kleiner als die Hälfte des Radius des Bodenbearbeitungswerkzeuges, während der Radius $R_3$ etwas größer ist als die Hälfte des Radius des Bodenbearbeitungswerkzeuges. Die Radien $R_1$ und $R_2$ können 120 mm aufweisen und der Radius $R_3$ 170 mm. Im Ausführungsbeispiel schneiden die Achsen der Bodenbearbeitungswerkzeuge die in Fahrtrichtung verlaufende Mittelachse in einem Winkel von 30$^o$, wobei der Abstand zwischen den benachbarten Bodenbearbeitungswerkzeugen eines jeden Abschnittes des Bodenbearbeitungsgerätes 10 ungefähr die Hälfte des Durchmessers bzw. 250 mm ausmacht. Der Abstand zwischen den innenliegenden Bodenbearbeitungswerkzeugen 28a und 29a der ersten Reihe 32 beträgt 3/4 des Durchmessers des größeren Bodenbearbeitungswerkzeuges bzw. 380 mm. Der Mittelpunkt der Drehachse eines einzelnen Bodenbearbeitungswerkzeuges 39 ist mit Bezug auf die Mittelachse 22 nach rechts versetzt, und zwar um einen Betrag von 1/8 des Durchmessers des größeren Bodenbearbeitungswerkzeuges 28. Die einzelnen Bodenbearbeitungswerkzeuge 38 sind in entgegengesetzter Richtung nach außen versetzt, und zwar um den gleichen Betrag. Der Querabstand zwischen den mittig angeordneten Bodenbearbeitungswerkzeugen 38 und 39 beträgt in etwa 120 mm, so daß hierdurch eine ausreichende Überlappung zwischen den Bodenbearbeitungswerkzeugen besteht, um sicherzustellen, daß der Boden im mittleren Bereich um die Mittelachse 22 ausreichend bearbeitet wird.

Im Ausführungsbeispiel beträgt der Bodendruck für ein jedes Bodenbearbeitungswerkzeug in der ersten Reihe 32 ca. 100 kg, während der Bodendruck für die nachfolgenden Bodenbearbeitungswerkzeuge, die in bereits aufgelockerten Boden eindringen, ein Drittel des Bodendruckes der Bodenbearbeitungswerkzeuge der ersten Reihe aufweist. Der Bodendruck eines jeden hinteren Bodenbearbeitungswerkzeuges beträgt ca. 30 kg.

Die hintere Reihe 34 weist einen ausreichend großen Abstand zur ersten Reihe 32 auf, so daß zumindest die äußeren Teile des Bodenbearbeitungswerkzeuges der zweiten Reihe 34 zumindest einen Abstand zu den hinteren Enden der vorderen Bodenbearbeitungswerkzeugen aufweisen, der in etwa dem Durchmesser eines größeren Bodenbearbeitungswerkzeuges entspricht bzw. 500 mm beträgt. Hierdurch wird ein ausreichender Abstand für die Pflanzenreste zwischen den Reihen geschaffen, und es ergibt sich außerdem die Möglichkeit, die einzelnen Bodenbearbeitungswerkzeuge 38 und 39 im Bereich der Mittelachse 22 zwischen der ersten Reihe 32 und der zweiten Reihe 34 ohne weiteres vorzusehen, so daß die Pflanzenreste ohne weiteres befördert werden können.

Bei der Montage der kürzeren Tragvorrichtungen 42 am Hauptrahmen 14 wird der Anschlag 106 von den Halterungen 24 entfernt, so daß die Feder 136 im entspannten Zustand ohne weiteres montiert werden kann. Nachdem die Federn zwischen den Halterungen 138 und den Anschlußgestängen 140 montiert sind, kann das Bodenbearbeitungsgerät 10 abgesenkt und die Feder 136 beaufschlagt werden, so daß das vordere Ende des Tragarmes 98 in eine Lage gebracht werden kann, in der der Anschlag 106 eingeführt werden kann. Werden die Federn 146 der längeren Tragarme 68 benutzt, so kann das Spannschloß 150 so verstellt werden, daß die Tragvorrichtungen 44 und 45 am Hauptrahmen 14 mit den Federn 146 im nicht zusammengepreßten Zustand montiert werden können.

Die Schenkel 114, 116 und 84, 86 weisen so viel eigene Federkraft auf, um Seitenkräfte zu absorbieren, die von den schräg gestellten Bodenbearbeitungswerkzeugen ausgehen. Die paarweise Montage der Bodenbearbeitungswerkzeuge an den Tragarmen 68, 98 reduziert nicht nur die Kosten des Bodenbearbeitungsgerätes 10, sondern sie ergibt auch eine gute Anpassung der Bodenbearbeitungswerkzeuge an den Boden, die bei sehr großen und breiten Maschinen nicht ohne weiteres gegeben ist. Ferner werden hierdurch die seitlichen Kräfte, die von den Bodenbearbeitungswerkzeugen ausgehen und auf den Hauptrahmen 14 des Bodenbearbeitungsgerätes übertragen werden, reduziert. Die im wesentlichen symmetrische Ausrichtung bzw. Anordnung der Bodenbearbeitungswerkzeuge um die Mittelachse 22 reduziert außerdem die auf den Schlepper 12 einwirkenden Kräfte, die dazu neigen würden, die Geradeausfahrt des Schleppers zu beeinträchtigen.

Patentansprüche

1. Bodenbearbeitungsgerät (10) mit sternförmigen, drehbar angeordneten Bodenbearbeitungswerkzeugen (28, 29, 38, 39) zum Bearbeiten des Bodens und zum Einmischen von Stoffen in den Boden, wobei die Bodenbearbeitungswerkzeuge mittels Tragvorrichtungen (42 - 45) am Hauptrahmen (14) des Gerätes (10) gelagert und gruppenweise in einer ersten und einer nachfolgenden zweiten Reihe (32, 34) angeordnet sind und mit der sich in Fahrtrichtung erstreckenden Mittelachse (22) einen spitzen Winkel einschließen, wobei der Winkel der Bodenbearbeitungswerkzeuge in der ersten Reihe entgegengesetzt zum Winkel der Bodenbearbeitungswerkzeuge in der zweiten Reihe verläuft, dadurch gekennzeichnet, daß in der ersten Reihe neben der ersten Gruppe Bodenbearbeitungswerkzeuge (28) eine zweite Gruppe Bodenbearbeitungswerkzeuge (29) vorgesehen ist, die entgegengesetzt zum Winkel der Bodenbearbeitungswerkzeuge (28) in der ersten Gruppe ebenfalls einen spitzen Winkel mit der Mittelachse (22) bildet, und daß eine dritte sowie vierte Gruppe (29 und 28) in der zweiten Reihe (34) angeordnet sind, wobei die Winkel der Bodenbearbeitungswerkzeuge (29) der dritten Gruppe entgegengesetzt zur ersten und die Winkel der Bodenbearbeitungswerkzeuge (28) der vierten Gruppe entgegengesetzt zu den Winkeln der Bodenbearbeitungswerkzeuge (29) der zweiten Gruppe ausgerichtet sind.

2. Gerät nach Anspruch 1, dadurch gekennzeichnet, daß die innenliegenden Bodenbearbeitungswerkzeuge (28a, 29a) der ersten und zweiten Gruppe Bodenbearbeitungswerkzeuge (28, 29) einen derart großen Abstand untereinander aufweisen, daß sie einen unbearbeiteten Streifen Boden zwischen sich liegen lassen, der von zusätzlich vorgesehenen, mit Bezug auf die Drehachse der vorderen Bodenbearbeitungswerkzeuge (28, 29) nach hinten versetzt angeordneten Bodenbearbeitungswerkzeugen (39, 38) bearbeitet wird, die das Erdgut in Richtung der außenliegenden Bodenbearbeitungswerkzeuge bewegen.

3. Gerät nach Anspruch 1 und 2, dadurch gekennzeichnet, daß die linken und rechten Bodenbearbeitungswerkzeuge (28, 29) der ersten und zweiten Gruppe dachförmig und die linken und rechten Bodenbearbeitungswerkzeuge (29, 28) der dritten und vierten Gruppe V-förmig zueinander angeordnet sind.

4. Gerät nach Anspruch 2, dadurch gekennzeichnet, daß die zwischen den innenliegenden Bodenbearbeitungswerkzeugen (28a, 29a und 29d, 28d) vorgesehenen zusätzlichen Bodenbearbeitungswerkzeuge (39, 38) auf der Mittelachse (22) des Gerätes angeordnet sind und diese in einem spitzen Winkel schneiden.

5. Gerät nach Anspruch 2 und 4, dadurch gekennzeichnet, daß das vordere mittlere Bodenbearbeitungswerkzeug (39) mit Bezug auf die Drehachsen der vorderen Bodenbearbeitungswerkzeuge (28, 29) in der ersten Reihe (32) nach hinten und das nachfolgende mittlere Bodenbearbeitungswerkzeug (38) mit Bezug auf die Drehachsen der hinteren in der zweiten Reihe (34) vorgesehenen Bodenbearbeitungswerkzeuge (29, 28) nach vorne versetzt ist.

6. Gerät nach Anspruch 5, dadurch gekennzeichnet, daß der Winkel zwischen dem vorderen mittleren Bodenbearbeitungswerkzeug (39) entgegengesetzt zum Winkel des nachfolgenden mittleren Bodenbearbeitungswerkzeuges (38) ausgerichtet ist.

7. Gerät nach einem oder mehreren der vorherigen Ansprüche, dadurch gekennzeichnet, daß das vordere mittlere Bodenbearbeitungswerkzeug (39) in etwa parallel zu den Bodenbearbeitungswerkzeugen (29) der zweiten Gruppe und das hintere mittlere Bodenbearbeitungswerkzeug in etwa parallel zu den Bodenbearbeitungswerkzeugen der vierten Gruppe verläuft.

8. Gerät nach einem oder mehreren der vorherigen Ansprüche, dadurch gekennzeichnet, daß die Bodenbearbeitungswerkzeuge (28, 29) mit Ausnahme der äußersten und eines ersten sowie der auf der Mittelachse (22) angeordneten Bodenbearbeitungswerkzeuge in etwa den gleichen Durchmesser aufweisen, während die übrigen einen kleineren Durchmesser aufweisen.

9. Gerät nach einem oder mehreren der vorherigen Ansprüche, dadurch gekennzeichnet, daß die äußersten Bodenbearbeitungswerkzeuge (28b, 29b) einen kleineren Durchmesser als jeweils angrenzende Bodenbearbeitungswerkzeuge (28, 29) aufweisen.

10. Gerät nach Anspruch 9, dadurch gekennzeichnet, daß das äußerste und das jeweils angrenzende Bodenbearbeitungswerkzeug (29c, 28c und 29, 28) der dritten und vierten Gruppe Bodenbearbeitungswerkzeuge außerhalb der korrespondierenden äußersten Bodenbearbeitungswerkzeuge (28, 29) in der ersten und zweiten Gruppe angeordnet sind.

11. Gerät nach einem oder mehreren der vorherigen Ansprüche, dadurch gekennzeichnet, daß die Bodenbearbeitungswerkzeuge (28, 29) der ersten bis vierten Gruppe jeweils paarweise mittels je eines nach unten offenen, U-förmigen Bügels (78) an je einer Tragvorrichtung (42 - 45) angeordnet sind.

12. Gerät nach einem oder mehreren der vorherigen Ansprüche, dadurch gekennzeichnet, daß die Bodenbearbeitungswerkzeuge (28, 29) der ersten bis vierten Gruppe mittels Federeinrichtungen (132, 134) nach unten auf den bzw. in den Boden gedrückt werden, wobei die Druckkräfte der Federeinrichtungen der ersten und zweiten Gruppe größer als die der dritten und vierten Gruppe sind.

13. Gerät nach einem oder mehreren der vorherigen Ansprüche, dadurch gekennzeichnet, daß die erste und dritte Gruppe links und die zweite und vierte Gruppe rechts von der sich in Fahrtrichtung erstreckenden Mittelachse (22), die der Mittelachse des Zugfahrzeuges entspricht, angeordnet und symmetrisch ausgerichtet sind.

14. Gerät nach einem oder mehreren der vorherigen Ansprüche, dadurch gekennzeichnet, daß der Abstand mit Bezug auf die Fahrtrichtung der ersten und dritten sowie der zweiten und vierten Gruppe Bodenbearbeitungswerkzeuge (28, 29) in etwa dem Durchmesser eines Bodenbearbeitungswerkzeuges entspricht, so daß die äußerste Begrenzung der Bodenbearbeitungswerkzeuge der dritten und vierten Gruppe ausreichend weit hinter der äußersten Begrenzung der vorderen Bodenbearbeitungswerkzeuge der ersten und zweiten Gruppe liegt.

15. Gerät nach Anspruch 12, dadurch gekennzeichnet, daß die Federeinrichtungen einenends am Hauptrahmen (14) und anderenends an die Tragvorrichtungen (42 - 45) angeschlossen sind und diese nach unten ziehen bzw. drücken, wobei die Schwenkbewegung der Tragvorrichtungen nach unten durch Anlage gegen den Hauptrahmen begrenzt wird.

16. Gerät nach Anspruch 15, dadurch gekennzeichnet, daß die Schwenkbewegung der Tragvorrichtung (42 - 45) durch einen am Hauptrahmen wahlweise einsetzbaren Anschlag (106) begrenzt wird, gegen den das vordere Ende der Tragvorrichtung zur Anlage bringbar ist.

17. Gerät nach einem oder mehreren der vorherigen Ansprüche, dadurch gekennzeichnet, daß die Tragvorrichtungen (42 - 45) aus sich in Fahrtrichtung erstreckenden Tragarmen (68, 98) gebildet sind, an denen die U-förmigen Bügel (78) mit den Bodenbearbeitungswerkzeugen (28, 29) in zwei parallel verlaufenden Reihen angeschlossen sind.

18. Gerät nach Anspruch 17, dadurch gekennzeichnet, daß der U-förmige Bügel (78) aus einem horizontal verlaufenden, am Tragarm (68, 98) befestigten Steg (82) mit zwei vertikal verlaufenden Schenkeln (84, 86) zur Aufnahme der Achsen der Bodenbearbeitungswerkzeuge (28, 29) besteht.

19. Gerät nach einem oder mehreren der vorherigen Ansprüche, dadurch gekennzeichnet, daß das Absenken der Bodenbearbeitungswerkzeuge (28, 29) durch die Anschläge (106) oder durch am Hauptrahmen (14) vorgesehene Halterungen begrenzt wird.

20. Gerät nach Anspruch 17, dadurch gekennzeichnet, daß die Tragarme (68, 98) zwei unterschiedliche Längen aufweisen.

21. Gerät nach Anspruch 17, dadurch gekennzeichnet, daß in der dritten und vierten Gruppe an dem Bügel (78) neben den beiden Bodenbearbeitungswerkzeugen (29) ein drittes im Durchmesser kleineres Bodenbearbeitungswerkzeug (29c) vorgesehen ist, dessen Drehachse mit der Drehachse des Bodenbearbeitungswerkzeuges am außenliegenden Schenkel (84) des Bügels (78) zusammenfällt.

22. Gerät nach Anspruch 20, dadurch gekennzeichnet, daß an den kürzeren Tragarmen (98) die Bodenbearbeitungswerkzeuge (28, 29) in der ersten Reihe und an den längeren Tragarmen (68) die Bodenbearbeitungswerkzeuge in der zweiten Reihe angeordnet sind, wobei die vorderen Kanten der Bodenbearbeitungswerkzeuge in der ersten Reihe in Richtung der Mittelachse (22) und die vorderen Kanten der nachfolgenden Bodenbearbeitungswerkzeuge (29, 28) in Richtung der Außenseite des Gerätes schräg zeigen.

23. Gerät nach einem oder mehreren der vorherigen Ansprüche, dadurch gekennzeichnet, daß jeweils die beiden äußersten Bodenbearbeitungswerkzeuge (28b, 28a, 29a, 29b, 29c, 29d, 28d, 28c) einer jeden Gruppe einen Durchmesser aufweisen, der kleiner ist als die übrigen Bodenbearbeitungswerkzeuge (28, 29).

24. Gerät nach einem oder mehreren der vorherigen Ansprüche, dadurch gekennzeichnet, daß die Bodenbearbeitungswerkzeuge (28, 29) einen Nabenteil (172) mit zahlreichen sich nach außen erstreckenden Zinken (174) aufweisen, die mit Bezug auf die Drehrichtung nach hinten gekrümmt sind, wobei eine jede Zinke eine stumpfe bzw. gewölbte Rückseite (176) und eine konkave Vorderseite bzw. Arbeitsfläche (178) aufweist, die Rückseite und die Vorderseite der Zinke beiderseits spitzwinklig zu je einer Kante (180) zusammen verlaufen, die Kante im wesentlichen an der Außenseite der Zinke (174) entlang verläuft, wobei die Vorderseite so ausgerichtet ist, daß sie im Arbeitseinsatz Erdgut mit Bezug auf die Fahrtrichtung des Gerätes seitlich bewegt.

25. Gerät nach Anspruch 24, dadurch gekennzeichnet, daß die Rückseite (176) eine parallel zur Drehachse der Bodenbearbeitungswerkzeuge (28, 29) verlaufende Linie (210) in einem Winkel von $25^{\circ}$ schneidet, wobei im Arbeitseinsatz die gewölbte Rückseite (176) in einem flachen Winkel zuerst in den Boden eintaucht.

26. Gerät nach Anspruch 25, dadurch gekennzeichnet, daß der zwischen der Rückseite und der parallel zur Drehachse verlaufenden Linie gebildete Winkel kleiner als $15^{\circ}$ ist.

27. Gerät nach einem oder mehreren der vorherigen Ansprüche, dadurch gekennzeichnet, daß der Durchmesser des
Nabenteils (172) des Bodenbearbeitungswerkzeuges (28,
29) halb so groß ist wie der Außendurchmesser des Bodenbearbeitungswerkzeuges (28, 29).

28. Gerät nach Anspruch 24, dadurch gekennzeichnet, daß
der Nabenteil (172) eine zwischen den Zinken (174)
vorgesehene scharfe Außenkante aufweist.

29. Gerät nach Anspruch 24, dadurch gekennzeichnet, daß
der Krümmungsradius der nach hinten abgebogenen Zinken
(174) kleiner ist als der Radius des Bodenbearbeitungswerkzeuges (28, 29).

30. Gerät nach einem oder mehreren der vorherigen Ansprüche, dadurch gekennzeichnet, daß der Bereich zwischen
den Zinken (174) eine Schneidkante für Unkräuter und
Wurzelreste aufweist.

31. Gerät nach einem oder mehreren der vorherigen Ansprüche, dadurch gekennzeichnet, daß der Außendurchmesser
des Bodenbearbeitungswerkzeuges (28, 29) ca. 450 mm
beträgt.

32. Gerät nach einem oder mehreren der vorherigen Ansprüche, dadurch gekennzeichnet, daß das Bodenbearbeitungswerkzeug (28, 29) gleichmäßig am Umfang verteilte Zinken (174) aufweist.

33. Gerät nach einem oder mehreren der vorherigen Ansprüche, dadurch gekennzeichnet, daß der Winkel zwischen
der Außenoberfläche des Bodenbearbeitungswerkzeuges
(28, 29) und der Mittelachse (22) des Gerätes ca. 30$^{\circ}$
beträgt.

34. Gerät nach einem oder mehreren der vorherigen Ansprüche, dadurch gekennzeichnet, daß die Vorderseite bzw. die Arbeitsfläche (178) der Zinke (174) zumindest einen Teilbereich aufweist, der mit der Drehachse einen Winkel von 35$^{\circ}$ bildet, so daß die Vorderseite den Boden in einem Winkel von kleiner als 45$^{\circ}$ mit Bezug auf die Querebene berührt.

35. Gerät nach einem oder mehreren der vorherigen Ansprüche, dadurch gekennzeichnet, daß die Vorderseite (178) der Zinke (174) eine nach vorne gerichtete Lippe in der Nähe der Seitenfläche des Bodenbearbeitungswerkzeuges (28, 29) aufweist.

Fig. I

Fig. 2

Fig. 3

Fig. 4

3/4

0206232

Fig.5a

176
210
182
184

Fig.5b

180
176
178
210
186
182
184

Fig.5c

180
176
178
210
186
182
184

Fig.5d

180
178
176
186
210
184
182

Fig.5e

180
178
176
186
182
184
210

Fig. 6

180  178  28  190  180  178
184  186  172

Fig. 7

54
20  62  24
106
48  134  138  68  44c
140  132  136  84
98
114  29c
42b  29
28  90c
28b